Europäisches Patentamt

European Patent Office

Office européen des brevets

(19)

(11) Veröffentlichungsnummer: **0 060 800**
**B1**

(12) **EUROPÄISCHE PATENTSCHRIFT**

(45) Veröffentlichungstag der Patentschrift:
11.06.86

(21) Anmeldenummer: 82630020.4

(22) Anmeldetag: 08.03.82

(51) Int. Cl.⁴: **G 01 F 23/26, B 22 D 11/16**

(54) Verfahren und Vorrichtung zum Messen des Füllstandes in Stranggiesskokillen.

(30) Priorität: 18.03.81 LU 83224
03.08.81 LU 83532

(43) Veröffentlichungstag der Anmeldung:
22.09.82 Patentblatt 82/38

(45) Bekanntmachung des Hinweises auf die Patenterteilung:
11.06.86 Patentblatt 86/24

(84) Benannte Vertragsstaaten:
**BE DE FR GB IT**

(56) Entgegenhaltungen:
**EP - A - 0 010 539**
**AT - B - 342 325**
**DE - A - 2 101 729**
**DE - A - 2 839 953**
**US - A - 3 519 060**

(73) Patentinhaber: **ARBED S.A., Avenue de la Liberté 19,
L-2930 Luxembourg (LU)**

(72) Erfinder: **Block, F.R., Dr. rer. nat., 58 Kalfstrasse,
D-5106 Roetgen (DE)**

(74) Vertreter: **Leitz, Paul et al, Administration Centrale de
l'ARBED Case Postale 1802, L-2930 Luxembourg (LU)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zum Messen des Füllstandes von flüssigem Metall in einer Stranggiess-Kokille, welche in Achsenrichtung oszilliert, wobei im Metall mittels wenigstens einer zusammen mit der Kokille oszillierenden Primär-Magnetfeldquelle Ströme induziert werden und die von diesen Strömen erzeugten Magnetfelder mit Hilfe von wenigstens einem ebenfalls mit der Kokille oszillierenden Detektor gemessen werden. Ausserdem werden zur Durchführung des Verfahrens geeignete Vorrichtungen beschrieben.

Die Kenntnis des Füllstandes innerhalb der Kokille ermöglicht es, eine entsprechende Nachfüllung bzw. eine entsprechende Strang-Ausziehgeschwindigkeit einzustellen. Zur Füllstandsmessung müssen zuverlässige und schnelle Messmethoden eingesetzt werden. Die entsprechenden Messvorrichtungen müssen auch dann einsetzbar sein, wenn in einem abgeschlossenen System unter Pulver oder unter Schutzgas gearbeitet wird; sie sollen ferner so eingebaut werden können, dass sie nicht stören - insbesondere darf der Zugang zur Kokille nicht behindert werden- und dass sie zugleich selbst geschützt sind. Solche Messeinrichtungen sollen überdies keine Gefahrenquellen darstellen. Die vorgenannten Anforderungen können mit den heute bekannten Messmethoden weder beim Giessen von Vorblöcken noch von Brammen erfüllt werden.

Optische Verfahren können nur bedingt eingesetzt werden wenn unter pulver oder in abgeschlossenen Systemen vergossen wird. Messmethoden in denen radioaktive Substanzen verwendet werden, stossen auf zunehmend strengere Genehmigungsverfahren.

Generell ist bekannt, dass durch Aenderungen der einen Leiter durchsetzenden magnetischen Felder im Leiter Ströme induziert werden, und dass aus den Sekundärfeldern dieser Ströme auf die Anwesenheit des Leiters geshlossen werden kann. Eine hierauf beruhende Messmetbode ist in der DE-A- 21 01 729 beschrieben. Bekannt ist auch, dass sich die Impedanz einer Spule ändert, wenn man einen Leiter in das Feld der Spule bringt.

Eine Messmethode, die auf diesen Erkenntnissen beruht wird in der FR-PS 2.251.811 beschrieben und sieht vor, dass ein kontaktloses Induktionsmessgerät die Lage der Grenze zwischen zwei Phasen bestimmt, die unterschledliche Dichten sowie Resistivität aufweisen, wobei zumindest eine der Phasen den Strom leitet ohne magnetisch zu sein. Das Messgerät begreift Arbeits- sowie Messpulen, die in offener Anordnung auf die besagte Grenze gerichtet sind. Wesentlich ist hierbei, dass das Messystem aus zwei offenen U-förmigen Magnetkernen besteht, die parallel zueinander angeordnet sind, wobei die Messpulen gegeneinander geschaltet sind.

Doch versagen solche Messmethoden beim Stranggiessen von Stahl, da die gut leitende Kupferkokille die Felder so Stark abschirmt, dass die Empfindlichkeit der Messeinrichtung nicht befriedigen kann.

Einrichtungen die über der Kokille oder am oberen Kokillenrand angeordnet sind, behindern die Zugänglichkeit und können durch überlaufenden Stahl zerstört werden.

Die Anmelderin hat in ihrer LU-A- 80.410 ein Verfahren beschrieben gemäss welchem der Einfluss der Kokille ausgeschaltet wird, indem eine felderzeugende Primärspule und zwei gegeneinander geschaltete gleichartige Sekundärspulen sowie das flüssige Metall eine Anordnung bilden, in der die Lage des Metallspiegels zu den Spulen eine induzierte Spannung hervorrufen kann. Das Verfahren ist dadurch gekennzeichnet, dass man die Primärspule sowie die Sekundärspule berührungslos koaxial um das Gefäss legt, dass man die aufgrund der Lage des Metallspiegels in den Sekundärspulen induzierte Spannung sowie die elektrische Leitfähigkeit des Metalls misst und dass man aus dem unter Berücksichtigung des gemessenen Leitfähigkeitwertes korridierten Spannungswert die Lage des Metallspiegels bestimmt.

Diese Methode eignet sich ersten Linie jedoch nur für Rohrkokillen kleiner Dimensionen.

Das Ziel der Erfindung bestand darin, eine Messmethode mit dazugehörigen Vorrichtungen zur Bestimmung des Füllstandes in Stranggiesskokillen zu finden, wobei die Erfindung den oben angegebenen Anforderungen genügen und die den bekannten Verfahren und Vorrichtungen innewohnende Nachteile vermeiden sollte.

Diese Aufgabe wird durch die in den patentansprüchen 1 bzw.4 angegebene Erfindung gelöst.

Statt magnetische Gleichfelder kann man erfindungsgemäss auch Felder mit Frequenzen bis zu einigen Hertz, die durch die gut leitende Kupferkokille nicht bzw. kaum behindert werden, verwenden.

Was die magnetische Permeabilität der flüssigen Metalle anbelangt, so stimmt diese in guter Näherung mit der von Vakuum, Luft- oder Schutzgasen überein, d.h. die relative magnetische Permeabilität unterscheidet sich allenfalls minimal von Eins. Auf der Grundlage der magnetischen Eigenschaften des flüssigen Metalls lassen sich diese also kaum indentifizieren. Die magnetischen Eigenschaften spielen deshalb auch bei der hier vorgestellten Methode eine untergeordnete Rolle.

Der Leitfähigkeitsunterschied der verschiedenen in Betracht kommenden Medien ist jedoch erheblich. So ist die Leitfähigkeit der Schlacken wesentlich geringer als die der flüssigen Metalle, und die Leitfähigkeit der umgebenden Luft oder Schutzgase ist in der Regel vernachlässigbar klein. Daher sind bei gleichen Randbedingungen die im flüssigen Metall induzierten elektrischen Ströme gross gegenüber denen, die in Schlacke oder Luft oder Schutzgas induziert werden oder fliessen würden, wenn über Elektroden Spannungen angelegt werden, was jedoch grössere Schwierigkeiten bereiten würde.

Dadurch, dass man die Kokille mit dem eingebauten Magnetfeld in vertikaler Richtung oszillieren lässt, bewegen sich nun in einfacher Weise Magnetfeld und Materie relativ zueinander. Hierdurch werden elektrische Spannungen induziert. Sie führen in inhomogenen Feldern zu Strömen, deren, Erregung sich der primären Erregung überlagert und diese langsam - mit der Hubfrequenz, also etwa 1 Hz periodisch schwächt und wieder verstärkt. Die induzierten Stromdichten sind dabei umso stärker je grösser die elektrische Leitfähigkeit ist. Die Messignale werden dabei auf die Leitfähigkeit bezogen.

Die primäre zeitunabhängige oder zeitlich nur langsam veränderliche Induktion wird damit so langsam variiert, dass sie durch die Wand der Kokille zum mitoszillierenden Messwertaufnehmer dringen und dort nach an sich bekannten Methoden registriert werden kann und eine laufende Information über den Badspiegel gibt.

Die Feldänderungen sind proportional zur Relativgeschwindigkeit zwischen Leiter und zeitkonstanter Induktion. Die Geschwindigkeit der Kokille relativ zur Giessbühne, sowie die Strangauszugsgeschwindigkeit werden in an sich bekannter Weise kontinuierlich gemessen, z.B. mit Hilfe von induktiven Wegaufnehmern oder Tachogeneratoren. Zur Bestimmung des Füllstandes werden die gemessenen Feldänderungen auf die Relativgeschwindigkeit zwischen Kokille und Strand bezogen.

Zur Erhöhung der Auflösung bei der Messung der Aenderungen der magnetischen Induktion ist es zweckmässig, den Untergrund abzuziehen. Hierzu wird am einfachsten an einer anderen geeigneten Stelle des Systems eine Verfleichsmessung durchgeführt.

Eine besonders einfache Auswertung ergibt sich, wenn konstante Primärfelder verwendet werden und der konstante Untergrund eliminiert wirdwas z.B. durch die Messung der zeitlichen Aenderungen der Induktion mit Hilfe von Messpulen erreicht werden kann oder indem der Gleichhanteil der Messignale unterdruckt wird - und dann das Verhältnis der Vergleichssignale als Mass für den Füllstand verwendet wird.

Durch diese Verhältnisbildung entfällt die Notwendigkeit, die Geschwindigkeit gesondert zu messen, da sie bei dieser Art der Auswertung herausfällt.

Die Vorrichtung zum Durchführen des erfindungsgemässen Verfahrens umfasst an einer der Aussenseiten der Kokillenwand, zumindest eine Feldquelle, die oberhalb der Mitte der Kokillen-Längsseite angeordnet ist, sowie zumindest einen Felddetektoren, wobei zur Messung der Geschwindigkeit der Kokille beim Oszillieren ein induktiver Wegaufnehmer vorgesehen ist. Der oder die Felddetektoren sowie der Wegaufnehmer sind mit einem Mikroprozessorsystem gekoppelt.

Letzteres übernimmt die Auswertung der gemessenen Signale und die Steuerung der Nachfüll- bzw. der Strangausziehgeschwindigkeit.

Als Magnetfeldquellen können Permanentmagnete oder Spulen mit einem magnetischen Kern dienen. In der Umgebung der Feldquellen sind magnetische oder nichtmagnetische Werstoffe derart zu verwenden, dass sich die gewünschten Felder ausbilden.

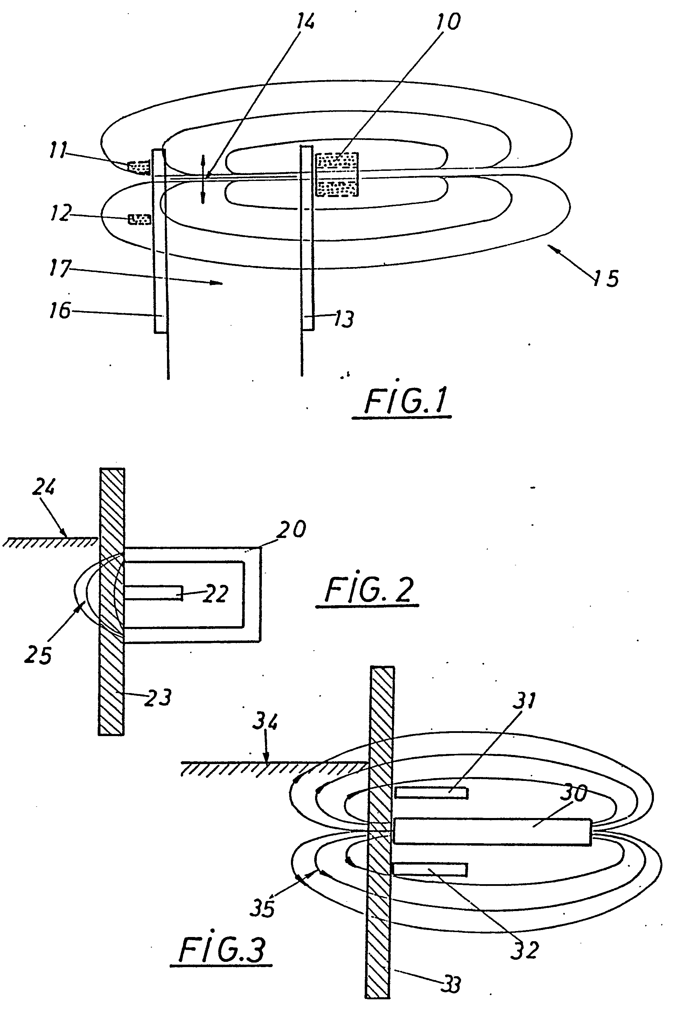

In Analogie zu Messmethoden mittels radioaktiver Strahlung, entsprechen in der ersten Ausführung (Fig.1) die Anordnung der Magnetfeldquelle und die Richtung des Magnetfeldes im wesentlichen der Anordnung der radioaktiven Strahlenquelle und der Richtung der radioaktiven Strahlen. Als Detektor wird statt des Szintillationszählers ein Detektor zur Messung des Magnetfeldes verwendet, z.B. ein Saturationskernmagnetometer, eine Hallsonde oder eine Messpule.

Statt einer Magnetfeldquelle können auch mehrere verwendet werden. Werden keine Permanentmagnete verwendet, sondern felderzeugende Elektromagnete so können diese elektrisch zweckmässig hintereinander geschaltet werden.

Im folgenden wird die Erfindung anhand von drei Ausführungsbeispielen näher erläutert. Es zeigen:

Die Fig.1 eine schematische Prinzipskizze des Aufhaus der erfindungsgemässen Vorrichtung bei der der Magnetfelderzeuger und die Feldmessvorrichtung auf zwei gegenüberliegenden Seiten der Stranggiesskokille angeordnet sind;

Die Fig.2 und 3 sind schematische Prinzipskizzen des Aufbaus der erfindungsgemässen Vorrichtung bei der der Magnetfelderzeuger und die Feldmessvorrichtung auf derselben Seite der Stranggiesskokille angebracht sind.

Figur 1 zeigt einen mit Gleich- oder Wechselstrom gespeisten Elektromagneten 10, der einen Kern mit hoher magnetischer Permeabilität enthält. Dieser erzeugt ein räumlich inhomogenes Magnetfeld 15, welches die Kokillenwände 13, 16 und das Stahlbad 17 durchsetzt. Auf einer der Feldquelle gegenüberliegnden Kokillen-Aussenseite 16, ist ein Magnetfelddetektor 11 und ggf. als Referenz ein zweiter Detektor 12 angeordnet. Der Magnet 10 und die Detektoren 11, 12, sind fest mit der Kokille verbunden und oszillieren relativ zur Giessbühne. Vom Kokillensystem aus betrachtet oszilliert der Badspiegel 14 des Stahlbades in einem inhomogenen Feld, wodurch periodische Spannungen und Ströme im Stahlbad induziert werden und wobei deren magnetische Felder sich dem primären überlagern.

Figur 2 zeigt einen U-förmigen Permanentmagneten 20 welcher ein zeitkonstantes Magnetfeld 25 erzeugt, dessen horizontale Feldkomponente stark höhenabhängig ist.

Zwischen den zwei Polen des Magneten 20 befindet sich ein Detektor 22, welcher den Wert des von der Höhe des Badspiegels 24 abhängigen Feldes misst.

Der Magnet 20 und der Detektor 22 sind an derselben Kokillen-Aussenseite 23 befestigt.

In der auf Figur 3 gezeigten Ausführung wird ein zeitkonstantes Magnetfeld 35, dessen horizontale Feldkomponente stark höhenabhängig ist, mit Hilfe eines Stabmagneten 30 erzeugt.

Zwei Detektoren 31 und 32 sind symmetrisch zum Stabmagneten 30 auf der Kokillenwand 33 angeordnet. Durch Differenzbildung der Mess-Signale oder durch Elimination des Gleichanteiles und der Verhältnisbildung wird die Empfindlichkeit der Anlage erhöht.

An Stelle der Permanentmagneten können in den auf Figur 2 und 3 gezeigten Ausführungsformen auch Elektromagnete eingesetzt werden. An die Wicklung dieser Magneten kann sowohl eine Gleichspannung als auch eine Wechselspannung angelegt werden.

Im letzten Fall wird die Frequenz, welche in der Grössenanordnung von einigen Hertz liegt derart gewählt, dass eine einfache Auswertung der gemessenen Signale erfolge. Diese Frequenz wird experimentell ermittelt und hängt vor allem von der baulichen Ausführung der Anlage ab.

In den beschriebenen Anordnungen oszilliert der Badspiegel relativ zu den Kokillen-Seiten, auf welchen die Magnete und die Detektoren befestigt sind.

Der nicht gezeigte induktive Wegaufnehmer, der die Kokillenoszillationverfolgt, ist wie die Felddetektoren mit einem ebenfalls nicht gezeigten Mikroprozessor gekoppelt.

Dieser Mikroprozessor wertet die Signale aus und übernimmt zugleich die Regelung des Stahlzuflusses.

In einer vorteilhaften Ausbildung überwacht der Mikroprozessor zusätzlich die Strangauszugsgeschwindigkeit und steuert die verschiedenen Motoren, welche die zum Vorschub des Guss-Stranges dienenden Walzen antreiben.

## Patentansprüche

1. Verfahren zum Messen des Füllstandes von flüssigem Metall in einer Stranggiess-Kokille, welche in Achsenrichtung oszilliert, wobei im Metall mittels wenigstens einer zusammen mit der Kokille oszillierenden Primär-Magnetfeldquelle Ströme induziert werden und die von diesen Strömen erzeugten Magnetfelder mit Hilfe von wenigstens einem ebenfalls mit der Kokille oszillierenden Detektor gemessen werden, dadurch gekennzeichnet, dass wenigstens eine der sich relativ zum Metall bewegenden Primär-Magnetfeldquellen ein sich zeitlich mit höchstens einigen Hz veränderndes horizontales, in vertikaler Richtung inhomogenes Feld erzeugt und dass aus den von den Detektoren gemessenen Feld-Werten, unter Berücksichtigung der Relativgeschwindigkeit zwischen Strang und oszillierender Kokille sowie der elektrischen Leitfähigkeit des flüssigen Metalls, auf den Füllstand geschlossen wird.

2. Verfahren nach Anspruche 1, dadurch gekennzeichnet, dass wenigstens eine der primär-Magnetfeldquellen ein Gleichfeld erzeugt.

3. Verfahren nach einem der Ansprüche 1-2, dadurch gekennzeichnet, dass mehrere Detektoren zur Magnetfeldmessung benutzt werden, diese an verschiedenen Stellen angeordnet werden und die Differenz der Messsignale gebildet wird.

4. Vorrichtung zur Durchführung des Verfahrens nach einem der Ansprüche 1-3, die Mittel zum Oszillieren einer Stranggiess-Kokille für flüssiges Metall (17) in Achsenrichtung, wenigstens eine primär-Magnetfeldquelle (10, 20, 30), sowie wenigstens einen induktiven Detektor (11, 12, 22, 31, 32) aufweist, wobei die Magnetfeldquellen sowie die Detektoren an der Kokille befestigt sind, dadurch gekennzeichnet, dass die Detektoren und die Magnetfeldquellen an den Kokillen-Längsseiten (16, 23, 33, bzw. 13, 23, 33) angeordnet sind, dass die Magnetfeldquellen ein sich zeitlich mit höchstens einigen Hz veränderndes Magnetfeld erzeugen und die Magnetfeldachse auf das flüssige Metall hin ausgerichtet ist und, dass Mittel zur Messung der Relativ-Geschwindigkeit zwischen Strang und oszillierender Kokille vorgesehen sind.

5. Vorrichtung nach Anspruch 4, dadurch gekennzeichnet, dass die Primär-Magnetfeldquellen Elektro-Magnete (10) sind.

6. Vorrichtung nach Anspruch 4, dadurch gekennzeichnet, dass die Primär-Magnetfeldquellen Permanent-Magnete (20,30) sind.

7. Vorrichtung nach Anspruch 4, dadurch gekennzeichnet, dass die primär-Magnetfeldquellen (20) U-förmig ausgebildet sind, wobei deren freien Enden zum flüssigen Metall hin ausgerichtet sind.

8. Vorrichtung nach einem der Ansprüche 4-7, dadurch gekennzeichnet, dass die Primär-Magnetfeldquellen und die Detektoren sich auf derselben Kokillen-Aussenseite befinden.

9. Vorrichtung nach einem der Ansprüche 4-7, dadurch gekennzeichnet, dass die Primär-Magnetfeldquellen und die Detektoren sich auf einander gegenüberliegenden Kokillen-Aussenseiten befinden.

## Claims

1. Method for measuring the filling level of liquid metal in a continuous casting mould which oscillates axially, wherein currents are induced in the metal through at least one primary magnetic field source oscillating with the mould and wherein the magnetic fields created by these currents are detected using at least one sensor oscillating also jointly with the mould, characterized in that at least one of the primary magnetic field sources, moving relatively to said metal, generates a horizontal, vertically non-homogenous field which changes with a frequency of at most a few Hz and that the filling level is derived from the field strengths measured by the sensors, whereby the relative speed between the cast and oscillating mould as well as the electric conductivity of the liquid metal are taken into account.

2. Method according to claim 1, characterized in that at least one of the primary magnetic field sources generates a continous field.

3. Method according to one of the claims 1-2, characterized in that several magnetic field measuring sensors are used, that these are located at different places and that the diiference of the measured signals is formed.

4. Device for implementing the method according to one of the claims 1-3, having means for oscillating axially the continuous casting mould for liquid metal (17), at least one primary magnetic field source (10, 20, 30) and at least one magnetic field sensor (11, 12, 22, 31, 32), the magnetic field sources and the sensors being attached to the mould, characterized in that the sensors and the magnetic field sources are located on the longitudinal sides (16, 23, 33, respectively 13, 23, 33) of the mould, that the magnetic field sources generate magnetic fields changing with at most a few Hz and having field axes which aim at the liquid metal and that there are means for measuring the relative speed between the cast and the oscillating mould.

5. Device according to claim 4, characterized in that the primary magnetic field sources are electro-magnets (10).

6. Device according to claim 4, characterized in that the primary magnetic field sources are permanent magnets (20, 30).

7. Device according to claim 4, characterized in that the primary magnetic field sources (20) are U-shaped, their free legs aiming at the liquid metal.

8. Device according to one of the claims 4-7, characterized in that the primary magnetic field sources and the sensors are arranged on the same mould side.

9. Device according to one of the claims 4-7, characterized in that the primary magnetic field sources and the sensors are arranged on opposite mould sides.

**Revendications**

1. Procédé pour mesurer le niveau de métal fondu dans une lingotière de coulée continue qui exécute des oscillations en direction axiale, dans lequel des courante sont induits dans le métal à l'aide d'au moins une source magnétique primaire oscillant conjointement avec la lingotière et où les champs magnétiques créés par ces courants sont mesurés à l'aide d'au moins un capteur oscillant conjointement avec la lingotière, caractérisé en ce qu'au moins une des sources primaires de champs magnétiques se déplaçant relativement au métal crée un champ horizontal, non homogène dans le sens vertical et présentant une variation dans le temps d'au plus quelques Hz et en ce que le niveau est déterminé à partir des intensités des champs mesurés à l'aide des capteurs et ceci en tenant compte de la vitesse relative entre brin de coulée et lingotière oscillante ainsi que de la conductivité électrique du métal liquide.

2. Procédé selon la revendication 1, caractérisé en ce qu'au moins une des sources primaires de champs magnétiques crée un champ continu.

3. Procédé selon une des revendications 1-2, caractérisé en ce que plusieurs capteurs sont utilisés pour la mesure des champs magnétiques, que ceux-ci sont disposés en des endroits différents et que la différence entre les signaux de mesure est formée.

4. Dispositif pour la mise en oeuvre du procédé selon une des revendications 1-3, comportant des moyens pour faire osciller une lingotière de coulée continue pour métal liquide (17) dans le sens axial, au moins une source primaire (10, 20, 30) de champs magnétiques, ainsi qu'au moins un capteur magnétique (11, 12, 22, 31, 32), les sources de champs magnétiques et les capteurs étant fixés sur la lingotière, caractérisé en ce que les détecteurs et les sources de champs magnétiques sont disposés sur les faces longitudinales (16, 23, 33, resp. 13, 23, 33) de la lingotière, que les sources de champs magnétiques créent des champs magnétiques présentant une variation dans le temps d'au plus quelques Az et dont l'axe vise le métal liquide et que des moyens pour mesurer la vitesse relative entre brin de coulée et lingotière oscillante sont prévus.

5. Dispositif selon la revendication 4, caractérisé en ce que les sources primaires de champs magnétiques sont des électro-aimants (10).

6. Dispositif selon la revendication 4, caractérisé en ce que les sources primaires de champs magnétiques sont des aimants permanents (20, 30).

7. Dispositif selon la revendication 4, caractérisé en ce que les sources primaires (20) de champs magnétiques sont en forme de U, les bras visant le métal liquide.

8. Dispositif selon une des revendications 4-7, caractérisé en ce que les sources primaires de champs magnétiques et les capteurs se trouvent du méme côté de la lingotière.

9. Dispositif selon une des revendications 4-7, caractérisé en ce que les sources primaires de champs magnétiques et les capteurs se trouvent sur des côtés opposés de la lingotière.

_FIG.1_

_FIG.2_

_FIG.3_